# EUROPEAN PATENT APPLICATION

(11) **EP 4 811 461 A1**
(43) Date of publication of application: **23.09.2026**
(21) Application number: 24902402.7
(22) Date of filing: 30.10.2024
(51) Int. Cl.: H01M 4/62, C09J 157/02

(54) **NON-FLUORINE BINDER AND APPLICATION THEREOF IN FIELD OF SECONDARY BATTERIES**

(30) Priority: 12.12.2023 CN 202311700496
(71) Applicant: Meishan Indigo Technology Co., Ltd., Meishan, Sichuan 620861 (CN)
(72) Inventor: WANG, Lu, Meishan, Sichuan 620861 (CN); CAI, Yu, Meishan, Sichuan 620861 (CN); LI, Rengui, Meishan, Sichuan 620861 (CN); ZHANG, Junru, Meishan, Sichuan 620861 (CN)
(74) Representative: MacLachlan IP Limited
(86) International application number: PCT/CN2024/128375
(87) International publication number: WO 2025/123978

(57) **Abstract**

The present invention relates to the technical field of battery binders, and specifically to a non-fluorine binder and an application thereof in the field of secondary batteries. The technical problem to be solved by the present invention is to provide a non-fluorine binder having good solubility in NMP. The binder comprises a modified resin, wherein the modified resin is formed by polymerizing a thermoplastic resin, a functional monomer and a nitrile-group-containing unsaturated monomer. The binder has normal-temperature solubility in an NMP solvent, can improve the high-temperature tolerance of the material in a carbonate electrolyte and the adhesion of the material to a metal foil, and can thus be applied to the fields of edge-coated protective adhesives, conductive dispersion adhesives and positive and negative electrode binders for lithium-ion batteries; and the binder can be used alone or in combination with other binders, has outstanding price and environmental advantages, and can be used in lithium-ion batteries instead of traditional fluorine resins

## Description

### CROSS-REFERENCE TO RELATED APPLICATIONS

This application claims the benefit and priority of Chinese Patent Application No. 2023117004969, filed on December 12, 2023, which is hereby incorporated by reference in its entirety for all purposes.

### FIELD OF THE INVENTION

The present invention relates to a non-fluorinated binder and its use in secondary batteries, belonging to the technical field of battery binders.

### BACKGROUND OF THE INVENTION

Lithium battery binders are polymeric materials that bond powdery components such as positive/negative electrode active materials and conductive agents to current collectors (copper or aluminum foil). Their functions are to bind the various materials, stabilize the electrode structure, and ensure electronic contact between the electrode active material and the conductive agent, as well as between the active material and the current collector during battery operation. Typically, the binder accounts for 2% to 5% of the positive or negative electrode active material.

With the deepening understanding of lithium batteries, the basic requirements for binders can be met by current technologies. The main challenge now is to resolve the contradictions among the requirements of slurry/electrode processing, electrolyte resistance, and battery performance. For example, PVDF is a relatively traditional and classic positive electrode binder material that exhibits good overall performance. However, as positive electrode materials continue to evolve and battery performance requirements increase, higher demands are placed on positive electrode binders. When PVDF is used as a binder in high- nickel positive electrode materials, problems such as slurry gelation and elimination reactions of PVDF molecules caused by the presence of alkali arise during the production process.

In response to these problems, thermoplastic elastomers, rubbers, and polyesters have become candidate materials for positive electrode binders. Nevertheless, these three classes of materials currently suffer from disadvantages such as insolubility in NMP, insufficient electrolyte swelling resistance, or poor electrochemical stability.

Thermoplastic elastomers have high flexibility and initial tack, can improve coating and electrode flexibility and reduce gelation problems during slurry preparation, and meet electrode processing requirements. However, they suffer from insolubility in NMP, insufficient electrolyte resistance, or insufficient electrochemical oxidation resistance. Therefore, research on such materials as binders has been limited. The research team of Dominic Rochefort in Canada used a commercial ethylene- acrylate- maleic anhydride copolymer (Lotader 5500) as a binder for lithium iron phosphate positive electrodes, and that material exhibited good electrode processability, battery capacity, and cycling performance. However, products such as the Lotader series contain a high proportion of low - polarity components (thermoplastic resins), so the polymer resin itself has low polarity and can only be used in low- polarity solvents such as toluene. Currently, all supporting systems in the lithium battery industry use N- methyl- 2- pyrrolidone (NMP) as a solvent. Therefore, binders used must have good solubility and fluidity in NMP to meet industry application requirements. Accordingly, there is an urgent need to develop binders that dissolve well in NMP at room temperature.

### BRIEF SUMMARY OF THE INVENTION

The technical problem to be solved by the present invention is to provide a non- fluorine binder having good solubility in NMP.

The non- fluorine binder of the present invention comprises a modified resin. The modified resin is polymerized from a thermoplastic resin, a functional monomer, and a nitrile- group- containing unsaturated monomer. In weight percent, the thermoplastic resin accounts for 20% to 50%, the functional monomer accounts for 2% to 20%, and the balance is the nitrile- group- containing unsaturated monomer. The modified resin has a concentration of ≥2 wt% after being dissolved in NMP at room temperature. The functional monomer includes at least one selected from the group consisting of unsaturated monomers having a carboxyl (acid anhydride) group, unsaturated monomers having a sulfonic acid group, unsaturated monomers having an amino group, and unsaturated monomers having a hydroxyl group.

By grafting the thermoplastic resin, the present invention imparts room- temperature solubility in NMP solvent, while also improving the material's high- temperature tolerance in carbonate- based electrolytes and its adhesion to metal foils. Accordingly, the binder can be used in the fields of edge- coating protective adhesives for lithium- ion batteries, conductive dispersion adhesives, and positive/negative electrode binders. It can be used alone or in combination with other binders.

Thermoplastic resins commonly used in battery binders are suitable for the present invention. In one embodiment, the thermoplastic resin includes at least one selected from the group consisting of ethylene- acrylic acid copolymers having an acrylic acid monomer content of less than 18%, ethylene- vinyl acetate copolymers having a vinyl acetate monomer content of less than 33%, ethylene- methyl acrylate copolymers, ethylene- ethyl acrylate copolymers, ethylene- butyl acrylate copolymers, and ethylene- maleic anhydride copolymers.

The functional monomer can improve the adhesion of the resin to metal foils. In some embodiments:
The unsaturated monomer having a carboxyl (acid anhydride) group includes at least one selected from (meth)acrylic acid, undecylenic acid, octadecenoic acid, crotonic acid, itaconic acid, fumaric acid, maleic anhydride, 2- ethylacrylic acid, isocrotonic acid, α- acetoxyacrylic acid, β- trans- aryloxyacrylic acid, α- chloro- β- E- methoxyacrylic acid, β- diaminoacrylic acid, acrylic anhydride, methylmaleic anhydride, dimethylmaleic anhydride, methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleate.

The unsaturated monomer having a sulfonic acid group includes at least one selected from 2- acrylamido- 2- methylpropanesulfonic acid, allyloxyhydroxypropylsulfonic acid, vinylsulfonic acid, vinylsulfonate, 2- acrylamide- 2- methylpropanesulfonic acid, allylsulfonic acid, and methallylsulfonic acid.

The unsaturated monomer having an amino group includes at least one selected from dimethylaminoethyl acrylate, diethylaminoethyl methacrylate, 2-(dimethylamino)ethyl methacrylate, and N-(2- aminoethyl)acrylamide.

The unsaturated monomer having a hydroxyl group includes at least one selected from hydroxyethyl acrylate, hydroxypropyl acrylate, hydroxybutyl acrylate, and hydroxyethyl caprolactone acrylate.

In one embodiment, the nitrile- group- containing unsaturated monomer includes at least one selected from acrylonitrile, 3- butenenitrile, 3- pentenenitrile, 4- pentenenitrile, and methacrylonitrile.

In a preferred embodiment, the thermoplastic resin accounts for 30% to 50%.

In a specific embodiment, the thermoplastic resin has a weight- average molecular weight of 50,000 to 400,000.

The present invention also provides the use of the above- described non- fluorine binder in the field of secondary batteries.

The non-fluorine binder of the present invention exhibits performance comparable to PVDF and can replace PVDF for use in lithium- ion batteries, including but not limited to use as an active material binder, an electrode edge- coating ceramic binder (tab adhesive), etc.

As used herein, "room temperature" means 25°C.

Compared with the prior art, the present invention has the following beneficial effects:
Through specific graft copolymerization modification of the thermoplastic resin to obtain a modified resin, the binder dissolves well in NMP, and the tolerance of the binder to carbonate- based electrolytes as well as its adhesion to foils are improved.

The binder exhibits room- temperature solubility in NMP solvent, and simultaneously improves the material's high- temperature tolerance in carbonate- based electrolytes and adhesion to metal foils. Therefore, it can be applied in the fields of edge- coating protective adhesives for lithium- ion batteries, conductive dispersion adhesives, and positive/negative electrode binders. It can be used alone or in combination with other binders.

The non- fluorine binder has excellent adhesion properties, stable electrochemical performance, contains no fluorine, and offers outstanding cost and environmental advantages. Thus, it can replace traditional fluorine- containing resins for use in lithium- ion batteries.

### DETAILED DESCRIPTION OF THE INVENTION

The present invention will be further described with reference to the following examples, which are not intended to limit the scope of the invention. Performance testing of the products was carried out using the following methods.

### (1) Solubility Test

A test sample was placed in a beaker with magnetic stirring, and NMP was added (concentration ≥2 wt%). The mixture was stirred and dispersed at 25°C for 24 hours, and the dissolution state of the test sample in NMP was observed.

### (2) Electrolyte Swelling Degree Test (70°C, 24 h)

The electrolyte swelling degree of a modified rubber film was determined as follows. An NMP solution containing the modified resin was completely dried in a forced- air oven at 110°C to form a film having a thickness of 0.2-0.5 mm. The film was cut into 2.5 mm × 2.5 mm squares, and approximately 1 g was accurately weighed (W0). The film piece was immersed in 100 g of electrolyte (Shanshan 12663) at 70°C for 24 hours. The film piece was then removed, and excess electrolyte on the surface was wiped off with a lint- free cloth. The mass of the film piece was weighed (W1). The swelling degree was calculated as follows: $Swelling degree \left(%\right) = \left[\left(W1-W0\right)/W0\right] \times 100$

### (3) DMC Solvent Dissolution Test (70°C, 24 h)

A modified rubber film piece was dried and weighed (M0). It was then immersed in DMC solvent, sealed, and placed in an environment at 70°C for 24 hours. The film piece was removed, surface solvent was wiped off with a lint- free cloth, and the film piece was dried in a forced- air oven at 110°C for 5 hours and weighed (M1). The dissolution amount was calculated as: $Dissolution \left(%\right) = \left[\left(M0-M1\right)/M0\right] \times 100$

### (4) Preparation of Lithium Cobalt Oxide Positive Electrode Sheet and Measurement of 180° Coating Peel Strength

A slurry was prepared according to the formulation shown in Table 1 and the mixing process shown in Table 2.

**Table 1**

| LiCoO₂ | SP Conductive Agent | Binder 1 - PVDF | Binder 2 - Modified Resin | Solid Content |
|---|---|---|---|---|
| 97% | 1% | 2.0% | 2.0% | 75-85% |

**Table 2**

| Step | Operation |
|---|---|
| Step 1 | Dissolve Binder 1 for 3 hours |
| Step 2 | Add dry powders and knead for 5 hours |
| Step 3 | Slow stirring and cooling for 2 hours, ready for use |

Electrode sheet preparation: The positive electrode slurry was coated onto an aluminum foil to obtain an electrode sheet with a single- side areal density of 240 g/m² and a width of 40 mm. The 180° coating peel strength was measured.

### Example 1

In a 500 mL four- necked flask, xylene was added. Under stirring, 19 g of ethylene- vinyl acetate resin particles (LG Korea, EA28400) were added and dissolved at 65°C to form a colorless, transparent solution. The mixture was then cooled to the reaction temperature of 60-70°C. A peroxide or azo initiator was added. 5 g of 2- acrylamido- 2- methylpropanesulfonic acid was added in one portion. Simultaneously, 76 g of acrylonitrile monomer was added dropwise over 2 hours. Additional peroxide or azo initiator was added every 3 hours. The reaction was maintained at 70°C for 15 hours. The solution was dried at 60°C with forced air to obtain the product.

### Example 2

In a 500 mL four- necked flask, xylene was added. Under stirring, 22.5 g of ethylene- vinyl acetate resin particles (LG Korea, EA28400) were added and dissolved at 65°C to form a colorless, transparent solution. The mixture was then cooled to 60-70°C. A peroxide or azo initiator was added. 10 g of allylsulfonic acid was added in one portion. Simultaneously, 67.5 g of acrylonitrile monomer was added dropwise over 2 hours. Additional initiator was added every 3 hours. The reaction was maintained at 70°C for 15 hours. The solution was dried at 60°C with forced air.

### Example 3

In a 500 mL four- necked flask, xylene was added. Under stirring, 30 g of ethylene- vinyl acetate resin particles (LG Korea, EA28400) were added and dissolved at 65°C. The mixture was cooled to 60-70°C. A peroxide or azo initiator was added. 20 g of acrylic acid was added in one portion. Simultaneously, 50 g of acrylonitrile monomer was added dropwise over 2 hours. Additional initiator was added every 3 hours. The reaction was maintained at 70°C for 15 hours. The solution was dried at 60°C with forced air.

### Example 4

In a 500 mL four- necked flask, xylene was added. Under stirring, 28.3 g of ethylene- ethyl acrylate resin particles (DuPont, EEA2116) were added and dissolved at 65°C. The mixture was cooled to 60-70°C. A peroxide or azo initiator was added. 15 g of methacrylic acid was added in one portion. Simultaneously, 56.7 g of acrylonitrile monomer was added dropwise over 2 hours. Additional initiator was added every 3 hours. The reaction was maintained at 70°C for 15 hours. The solution was dried at 60°C with forced air.

### Example 5

In a 500 mL four- necked flask, xylene was added. Under stirring, 47.5 g of ethylene- acrylic acid resin particles (LG Korea, EAA5080, Mw 200,000) were added and dissolved at 65°C. The mixture was cooled to 60-70°C. A peroxide or azo initiator was added. 5 g of N-(2- aminoethyl)acrylamide was added in one portion. Simultaneously, 47.5 g of acrylonitrile monomer was added dropwise over 2 hours. Additional initiator was added every 3 hours. The reaction was maintained at 70°C for 15 hours. The solution was dried at 60°C with forced air.

### Example 6

In a 500 mL four- necked flask, xylene was added. Under stirring, 26 g of ethylene- maleic anhydride resin particles (DuPont, 21E533) were added and dissolved at 65°C. The mixture was cooled to 60-70°C. A peroxide or azo initiator was added. 20 g of hydroxyethyl acrylate was added in one portion. Simultaneously, 54 g of acrylonitrile monomer was added dropwise over 2 hours. Additional initiator was added every 3 hours. The reaction was maintained at 70°C for 15 hours. The solution was dried at 60°C with forced air.

### Example 7

In a 500 mL four- necked flask, xylene was added. Under stirring, 30 g of ethylene- butyl acrylate resin particles (DuPont, AC 34035) were added and dissolved at 65°C. The mixture was cooled to 60-70°C. A peroxide or azo initiator was added. 8 g of maleic anhydride was added in one portion. Simultaneously, 62 g of acrylonitrile monomer was added dropwise over 2 hours. Additional initiator was added every 3 hours. The reaction was maintained at 70°C for 15 hours. The solution was dried at 60°C with forced air.

### Example 8

In a 500 mL four- necked flask, xylene was added. Under stirring, 30 g of ethylene- vinyl acetate resin particles (LG Korea, EA28400) were added and dissolved at 65°C. The mixture was cooled to 60-70°C. A peroxide or azo initiator was added. 10 g of undecylenic acid was added in one portion. Simultaneously, 60 g of 3- butenenitrile monomer was added dropwise over 2 hours. Additional initiator was added every 3 hours. The reaction was maintained at 70°C for 15 hours. The solution was dried at 60°C with forced air.

### Comparative Example 1

Unmodified EVA resin (LG Korea, EA28400).

### Comparative Example 2

Unmodified EAA resin (LG Korea, EAA5080).

### Comparative Example 3

In a 500 mL four- necked flask, xylene was added. Under stirring, 17 g of ethylene- vinyl acetate resin particles (LG Korea, EA28400) were added and dissolved at 65°C. The mixture was cooled to 60-70°C. A peroxide or azo initiator was added. 6 g of acrylic acid was added in one portion. Simultaneously, 77 g of acrylonitrile monomer was added dropwise over 2 hours. Additional initiator was added every 3 hours. The reaction was maintained at 70°C for 15 hours. The solution was dried at 60°C with forced air.

### Comparative Example 4

In a 500 mL four- necked flask, xylene was added. Under stirring, 52 g of ethylene- vinyl acetate resin particles (LG Korea, EA28400) were added and dissolved at 65°C. The mixture was cooled to 60-70°C. A peroxide or azo initiator was added. 5 g of acrylic acid was added in one portion. Simultaneously, 43 g of acrylonitrile monomer was added dropwise over 2 hours. Additional initiator was added every 3 hours. The reaction was maintained at 70°C for 15 hours. The solution was dried at 60°C with forced air.

### Comparative Example 5

In a 500 mL four- necked flask, xylene was added. Under stirring, 30 g of ethylene- vinyl acetate resin particles (LG Korea, EA28400) were added and dissolved at 65°C. The mixture was cooled to 60-70°C. A peroxide or azo initiator was added. 1 g of acrylic acid was added in one portion. Simultaneously, 69 g of acrylonitrile monomer was added dropwise over 2 hours. Additional initiator was added every 3 hours. The reaction was maintained at 70°C for 15 hours. The solution was dried at 60°C with forced air.

### Comparative Example 6

In a 500 mL four- necked flask, xylene was added. Under stirring, 30 g of ethylene- vinyl acetate resin particles (LG Korea, EA28400) were added and dissolved at 65°C. The mixture was cooled to 60-70°C. A peroxide or azo initiator was added. 21 g of acrylic acid was added in one portion. Simultaneously, 49 g of acrylonitrile monomer was added dropwise over 2 hours. As the reaction proceeded, the emulsion stability deteriorated, gel particles gradually formed and precipitated, and the reaction was passively terminated.

### Comparative Example 7

In a 500 mL four- necked flask, xylene was added. At 60-70°C, a peroxide or azo initiator was added. 20 g of acrylic acid was added in one portion. Simultaneously, 50 g of acrylonitrile monomer was added dropwise over 2 hours. Additional initiator was added every 3 hours. The reaction was maintained at 70°C for 15 hours. The solution was dried at 60°C with forced air. The dried material was mixed with 30 g of ethylene- vinyl acetate resin particles (LG Korea, EA28400). The mixture was dissolved in NMP at high temperature and upon cooling to room temperature formed a gel, making it impossible to prepare a positive electrode slurry.

The performance test results are summarized in Table 3.

**Table 3**

| Material | NMP Solubility | High-Temperature Liquid Resistance (60°C, 3 days) | | Positive Electrode Coating Peel Strength / Application Situation |
|---|---|---|---|---|
| | | Dissolution in DMC | Swelling in Electrolyte | |
| Example 1 | Fully dissolved | 1.7% | 23.5% | 65 N/m |
| Example 2 | Fully dissolved | 2.8% | 29% | 74 N/m |
| Example 3 | Fully dissolved | 6.9% | 37.5% | 112 N/m |
| Example 4 | Fully dissolved | 8.1% | 47% | 81.4 N/m |
| Example 5 | Fully dissolved | 1.53% | 25.6% | 137 N/m |
| Example 6 | Fully dissolved | 10.2% | 63.4% | 97 N/m |
| Example 7 | Fully dissolved | 7.8% | 52% | 89 N/m |
| Example 8 | Fully dissolved | 1.47% | 27.5% | 106.8 N/m |
| Comparative Example 1 | Polymer precipitated | Dissolved | 135% | Unable to prepare slurry |
| Comparative Example 2 | Polymer precipitated | 4.5% | 8% | Unable to prepare slurry |
| Comparative Example 3 | Fully dissolved | 2.3% | 28.7% | Electrode sheet hard and brittle, coating peeled off during rolling |
| Comparative Example 4 | Gel-like | 45% | 174% | Unable to prepare slurry |
| Comparative Example 5 | Insoluble | / | / | Unable to prepare slurry |
| Comparative Example 6 | Reaction could not proceed normally | | | |
| Comparative Example 7 | Insoluble | / | / | Unable to prepare slurry |

As can be seen, the modified resin of the present invention dissolves well in NMP, improves the binder's tolerance to carbonate-based electrolytes, and enhances its adhesion to foils.

## Claims

1. A non-fluorine binder, comprising a modified resin, wherein the modified resin is polymerized from a thermoplastic resin, a functional monomer, and a nitrile-group-containing unsaturated monomer, and wherein, by weight percentage:
the thermoplastic resin accounts for 20% to 50%,
the functional monomer accounts for 2% to 20%,
the balance is the nitrile-group-containing unsaturated monomer; and
the modified resin has a concentration of ≥2 wt% after being dissolved in N-methyl-2-pyrrolidone (NMP) at 25°C;
and wherein the functional monomer comprises at least one selected from the group consisting of an unsaturated monomer having a carboxyl or acid anhydride group, an unsaturated monomer having a sulfonic acid group, an unsaturated monomer having an amino group, and an unsaturated monomer having a hydroxyl group.

2. The non-fluorine binder according to claim 1, wherein the thermoplastic resin comprises at least one selected from the group consisting of an ethylene-acrylic acid copolymer having an acrylic acid monomer content of less than 18%, an ethylene-vinyl acetate copolymer having a vinyl acetate monomer content of less than 33%, an ethylene-methyl acrylate copolymer, an ethylene-ethyl acrylate copolymer, an ethylene-butyl acrylate copolymer, and an ethylene-maleic anhydride copolymer.

3. The non-fluorine binder according to claim 1, wherein:
the unsaturated monomer having a carboxyl or acid anhydride group comprises at least one selected from the group consisting of (meth)acrylic acid, undecylenic acid, octadecenoic acid, crotonic acid, itaconic acid, fumaric acid, maleic anhydride, 2-ethylacrylic acid, isocrotonic acid, α-acetoxyacrylic acid, β-trans-aryloxyacrylic acid, α-chloro-β-E-methoxyacrylic acid, β-diaminoacrylic acid, acrylic anhydride, methylmaleic anhydride, dimethylmaleic anhydride, methylmaleic acid, dimethylmaleic acid, phenylmaleic acid, chloromaleic acid, dichloromaleic acid, fluoromaleic acid, diphenyl maleate, nonyl maleate, decyl maleate, dodecyl maleate, octadecyl maleate, and fluoroalkyl maleate;
the unsaturated monomer having a sulfonic acid group comprises at least one selected from the group consisting of 2-acrylamido-2-methylpropanesulfonic acid, allyloxyhydroxypropylsulfonic acid, vinylsulfonic acid, vinylsulfonate, 2-acrylamide-2-methylpropanesulfonic acid, allylsulfonic acid, and methallylsulfonic acid;
the unsaturated monomer having an amino group comprises at least one selected from the group consisting of dimethylaminoethyl acrylate, diethylaminoethyl methacrylate, 2-(dimethylamino)ethyl methacrylate, and N-(2-aminoethyl)acrylamide;
the unsaturated monomer having a hydroxyl group comprises at least one selected from the group consisting of hydroxyethyl acrylate, hydroxypropyl acrylate, hydroxybutyl acrylate, and hydroxyethyl caprolactone acrylate.

4. The non-fluorine binder according to claim 1, wherein the nitrile-group-containing unsaturated monomer comprises at least one selected from the group consisting of acrylonitrile, 3-butenenitrile, 3-pentenenitrile, 4-pentenenitrile, and methacrylonitrile.

5. The non-fluorine binder according to claim 1, wherein the thermoplastic resin accounts for 30% to 50% by weight.

6. The non-fluorine binder according to claim 1, wherein the thermoplastic resin has a weight-average molecular weight of 50,000 to 400,000.

7. Use of the non-fluorine binder according to any one of claims 1 to 6 in the field of secondary batteries.
